# NEUE EUROPÄISCHE PATENTSCHRIFT

(11) **EP 2 507 083 B2**
(45) Veröffentlichungstag und Bekanntmachung des Hinweises auf die Entscheidung über den Einspruch: **21.12.2022**
(45) Hinweis auf die Patenterteilung: 26.07.2017
(21) Anmeldenummer: 10785077.8
(22) Anmeldetag: 02.12.2010
(51) Int. Cl.: B60H 3/06, B60H 1/00, B01D 46/00, B01D 46/10, B01D 46/52

(54) **FILTERELEMENT UND VERFAHREN ZUM HERSTELLEN EINES FILTERELEMENTS**
FILTER ELEMENT AND METHOD FOR PRODUCING A FILTER ELEMENT
ELÉMENT FILTRANT ET PROCÉDÉ DE FABRICATION D'UN ÉLÉMENT FILTRANT

(30) Priorität: 02.12.2009 DE 102009056511
(43) Veröffentlichungstag der Anmeldung: 10.10.2012
(73) Patentinhaber: MANN+HUMMEL GmbH, 71636 Ludwigsburg (DE)
(72) Erfinder: RABANTER, Anton, 84163 Steinberg (DE)
(74) Vertreter: Horn Kleimann Waitzhofer Patentanwälte PartG mbB
(86) Internationale Anmeldenummer: PCT/EP2010/068751
(87) Internationale Veröffentlichungsnummer: WO 2011/067342

(56) Entgegenhaltungen:
- EP-A1- 1 208 902
- WO-A1-2005/063361
- WO-A2-99/42719
- DE-A1- 4 327 368
- DE-A1- 4 329 330
- DE-A1- 10 231 060
- DE-A1- 19 631 295
- DE-A1- 19 652 028
- DE-U1- 29 904 204
- DE-U1-202009 008 466
- US-A- 5 509 950
- US-A- 5 679 122
- US-A- 6 004 366
- US-A1- 2008 016 832
- US-A1- 2008 148 946
- US-B1- 6 830 443

## Beschreibung

### Technisches Gebiet

Die vorliegende Erfindung betrifft ein Filterelement, insbesondere einen Innenraumluftfilter für Kraftfahrzeuge. Ferner wird ein Verfahren zum Herstellen von Filterelementen beschrieben.

Um z. B. im Automobilbereich Fluide, wie Kraftstoffe, andere Betriebsmittel oder Innenraumluft, zu filtern, werden häufig gefaltete oder plissierte Filtervliesmaterialien eingesetzt. Dabei ist es oft notwendig, die Faltenprofile durch Hilfsmittel zu stützen, damit auch bei Fluiddurchtritt die Form erhalten bleibt. Ferner ist es gewünscht, die Filterelemente an ihren Rändern gegen die Filteraufnahme oder das jeweilige Filtergehäuse abzudichten, damit kein ungefiltertes Fluid an dem plissierten Filtermedium vorbeiströmen kann.

### Stand der Technik

Um ein zickzackförmiges Filtermedium hinsichtlich der Faltungen zu stabilisieren, wurden in der Vergangenheit Seitenbänder aus Filtervliesmaterial auf die Faltenprofile aufgeklebt, welche einerseits zur Stabilisierung dienten und andererseits mit einer abstehenden Faltlasche versehen als Dichtung wirkten. Andere bekannte Filterelemente wurden mit einem auf die Ränder aufgetragenen Schaum abgedichtet und dadurch die Faltungen gestützt. Allerdings war diese Dichtschaumlippe Herstellungsverfahren-bedingt nur an besonderen Stellen anbringbar. Aus der US 5,679,122 ist ein flexibles Filterelement mit einem zick-zack gefalteten Filtermedium bekannt. Das Filtermedium ist von einem Kunststoffrahmen umgeben, der in einem Spritzgussverfahren an dem Filtermedium angebracht ist. Eine umlaufende Kunststoffschaumdichtung ist wiederum auf dem Kunststoffrahmen angebracht.

Die DE 196 31 295 A1 beschreibt einen Gasfilter einer ABC-Schutzbelüftungsanlage mit einem starren, umlaufenden Dichtrahmen und einer fest darauf angebrachten elastischen Dichtung.

Vor diesem Hintergrund liegt der vorliegenden Erfindung die Aufgabe zugrunde, ein verbessertes Filterelement und Herstellungsverfahren bereitzustellen.

### Offenbarung der Erfindung

Diese Aufgabe wird durch ein Filterelement gemäß Patentanspruch 1 gelöst.

Demgemäß ist ein Filterelement vorgesehen, welches insbesondere ein Innenraumluftfilter für ein Kraftfahrzeug ist. Das Filterelement weist ein Faltenpack, einen zumindest teilweise an das Faltenpack gespritzten Kunststoffrahmen und eine zumindest teilweise an den Kunststoffrahmen angeschäumte Kunststoffschaumdichtung auf.

Der an das Faltenpack angespritzte Kunststoffrahmen dient zum Beispiel zum Stützen von Faltenprofilen des Faltenpacks. Ferner kann der an das Faltenpack angespritzte Kunststoffrahmen zum seitlichen Abdichten zum Beispiel gegenüber einer Filteraufnahme dienen.

Der Kunststoffrahmen und die Kunststoffschaumdichtung sind vorzugsweise in einem Spritzgussverfahren erzeugt. Das Filterelement kann besonders aufwandsgünstig hergestellt werden, da wie es sonst üblich ist, keine Verklebung zwischen einem separaten Seitenband und dem Faltenpack notwendig ist. Durch das Spritzen des Kunststoffrahmens, der ausreichend starr ist, um dem Faltenpack Stabilität zu verleihen, erreicht man eine gute feste Verbindung mit den Faltenprofilen durch das Spritzgießen. Ebenfalls durch das Einspritzen der Kunststoffschaumdichtung, beispielsweise durch ein Reaktionsspritzgieß-verfahren, können beliebige Formen für Rahmen und Dichtung realisiert werden.

Als Profil der Falten oder Faltenprofil wird die zickzackförmige Kante des gefalteten Filtermaterialbogens verstanden. Das Faltenprofil liegt somit zwischen zwei Endfaltenabschnitten des Faltenpacks.

Der Kunststoffrahmen kann beispielsweise ein Thermoplast, wie Polyamid aufweisen, und die Kunststoffschaumdichtung hat zum Beispiel Polyurethanschaum. Selbstverständlich sind weitere Materialien denkbar, wie beispielsweise ABS-Kunststoffe für den Kunststoffrahmen oder Polypropylen. Grundsätzlich eignen sich Thermoplaste zum Spritzgießen.

Bei dem Filterelement sind ein erstes und ein zweites Faltenpack vorgesehen, welche durch mindestens eine Rahmenstrebe des Kunststoffrahmens getrennt sind. Die Faltenprofile werden durch den Kunststoffrahmen und/oder die Rahmenstrebe gestützt. Die Faltenpacks können dabei unterschiedliche Größen haben, so dass das Filterelement an die Geometrie der Einbaugegebenheiten angepasst werden kann. Die Rahmenstrebe, welche beispielsweise mehrere Rahmenabschnitte definiert, führt zu einer weiteren Versteifung des gesamten Filterelementes.

Vorzugsweise umläuft die Kunststoffschaumdichtung einen äußeren Rand des das Filterelement umschließenden, Kunststoffrahmens. Der flexible Kunststoffschaum führt dann zu einer sicheren Abdichtung des Filterelementes an dem jeweiligen Gehäuse für das Filterelement.

Bei einer weiteren Ausführungsform ist in dem Kunststoffrahmen des Filterelements mindestens eine Öffnung vorgesehen, durch die die Kunststoffschaumdichtung verläuft. Dadurch wird eine verbesserte Verbindung zwischen der Kunststoffschaumdichtung und dem Kunststoffrahmen erzielt. Die Kunststoffschaumdichtung, welche gespritzt wird, kann dann im noch nicht erstarrten Zustand durch die Öffnungen des Kunststoffrahmens treten und verriegelt quasi nach dem Erstarren mit dem Rahmen der einerseits eine Faltenprofilstabilisierung gewährleistet und andererseits die flexible Schaumdichtung trägt.

Als Filtermaterialien für das Faltenpack sind beispielsweise zellulosehaltige Materialien, Glasfasermischgewebe, Polyesterfasern aufweisende Materialien, Vliesmaterial und/oder laminierte Papiere geeignet.

Es wird ferner ein Verfahren zum Herstellen eines Filterelementes nach Anspruch 8 vorgeschlagen.

Dabei wird ein Kunststoffrahmen zunächst teilweise um ein Faltenpack in einem ersten Spritzgussvorgang erzeugt. Anschließend wird in einem zweiten Spritzgussvorgang an den Kunststoffrahmen zumindest teilweise eine Kunststoffschaumdichtung in einem zweiten Spritzgussvorgang erzeugt.

Das Verfahren hat gegenüber üblichen Herstellungsverfahren den Vorteil, dass das Spritzgießen besonders zügig erfolgen kann. Da die beiden Materialien für den Kunststoffrahmen um die Kunststoffschaumdichtung derart gewählt werden können, dass eine feste Verbindung der Grenzflächen beider Materialien erfolgt, müssen keine zusätzlichen Verklebungen vorgenommen werden. Ferner kann durch das Spritzgießen, eine wohldefinierte Form und Geometrie des gesamten Filterelementes erzielt werden. Bei beispielsweise gegossenen, geschäumten Rahmen ohne Spritzgießen müssen ansonsten weitere Nachbearbeitungen erfolgen, um z. B. Grate zu entfernen. Beim Spritzgießen ist das aus der jeweiligen Kavität des Spritzgusswerkzeugs entnommene Werkstück, also das fertige Filterelement, welches Faltenpack, Kunststoffrahmen und Kunststoffschaumdichtung umfasst, fertig und kann ausgeliefert werden.

Das Verfahren umfasst in einer Variante die Schritte: Einlegen eines Faltenpacks in ein erstes Spritzgusswerkzeug; Spritzgießen eines Kunststoffrahmens zumindest teilweise um das Faltenpack zum Stützen von Faltenprofilen; Einlegen des mit dem Kunststoffrahmen versehenen Faltenpacks in ein zweites Spritzgusswerkzeug; und Reaktionsspritzgießen eines Kunststoffschaums zum Ausbilden der Kunststoffschaumdichtung an dem Kunststoffrahmen.

Nur durch wenige Verfahrensschritte ergibt sich somit ein fertiges Filterelement mit guten mechanischen Eigenschaften durch den starren Kunststoffrahmen und eine zuverlässige Randabdichtung durch die flexible Kunststoffschaumdichtung.

In einer Variante des Verfahrens können das erste und das zweite Spritzgusswerkzeug in einem einzigen Spritzgusswerkzeug integriert werden. Das Spritzgusswerkzeug umfasst dann mehrere Kavitäten zum Ausbilden der Kunststoffteile. Dann können auch halbfertige Elemente, die beispielsweise lediglich das Faltenpack und den Kunststoffrahmen umfassen, gleichzeitig mit dem Ausbilden der Kunststoffschaumdichtung an einem anderen Filterelement hergestellt werden. Entsprechend kann der erste Spritzgussvorgang mit dem ersten Spritzgusswerkzeug bzw. einer ersten Kavität des Spritzgusswerkzeugs an einem ersten Faltenpack erfolgen, und der zweite Spritzgussvorgang mit dem zweiten Spritzgusswerkzeug bzw. einer zweiten Kavität des Spritzgusswerkzeugs kann an einem zweiten, mit einem Kunststoffrahmen versehenen Faltenpack gleichzeitig vollzogen werden.

Bei dem Verfahren ist vorgesehen, dass mehrere Faltenpacks derart mit einem Kunststoffrahmen umspritzt werden, dass mindestens eine Rahmenstrebe Faltenprofile unterschiedlicher Faltenpacks stützt. Wie zuvor erwähnt, kann durch die Rahmenstrebe eine verbesserte Stabilität erzielt werden und darüber hinaus der Raum in einem entsprechenden Filtergehäuse durch auch unregelmäßige Geometrien der Faltenpacks günstig genutzt werden.

Bei einer weiteren Verfahrensvariante wird ein aus zwei Spritzgusswerkzeugteilen gebildetes Spritzgusswerkzeug verwendet. Dann wird ausschließlich eines der Spritzgusswerkzeugteile zum Öffnen und Schließen des Spritzgusswerkzeuges bewegt. Dies hat den Vorteil, dass nur eines der Werkzeugteile, welches beispielsweise auch integriert ein erstes und zweites Spritzgusswerkzeug umfassen kann, mit entsprechenden Automatisierungen zur Bewegung versehen werden muss.

Im Herstellungsverfahren werden vorzugsweise Polyamide als Kunststoffrahmenmaterial und Polyurethanschaum als Kunststoffschaumdichtungsmaterial verwendet.

Weitere mögliche Implementierungen der Erfindung umfassen auch nicht explizit genannte Kombinationen von zuvor oder im Folgenden bezüglich der Ausführungsbeispiele beschriebenen Merkmale, Verfahrensschritte oder Ausführungsformen. Dabei wird der Fachmann auch Einzelaspekte als Verbesserungen oder Ergänzungen zu der jeweiligen Grundform der Erfindung hinzufügen.

### Kurze Beschreibung der Zeichnungen

Es zeigt dabei:
Fig. 1: eine perspektivische Darstellung eines ersten Ausführungsbeispiels für ein Faltenpack;
Fig. 2: eine perspektivische Darstellung des mit einem Kunststoffrahmen versehenen Faltenpacks;
Fig. 3: Ausschnittsdarstellungen eines Ausführungsbeispiels für ein Filterelement;
Fig. 4: schematische Darstellungen eines erfindungsgemäßen Ausführungsbeispiels für ein Filterelement; und
Fig. 5: Darstellungen zur Erläuterung von Varianten eines Herstellungsverfahrens für Filterelemente.

In den Figuren sind gleiche oder funktionsgleiche Elemente, sofern nichts Anderes angegeben ist, mit denselben Bezugszeichen versehen worden.

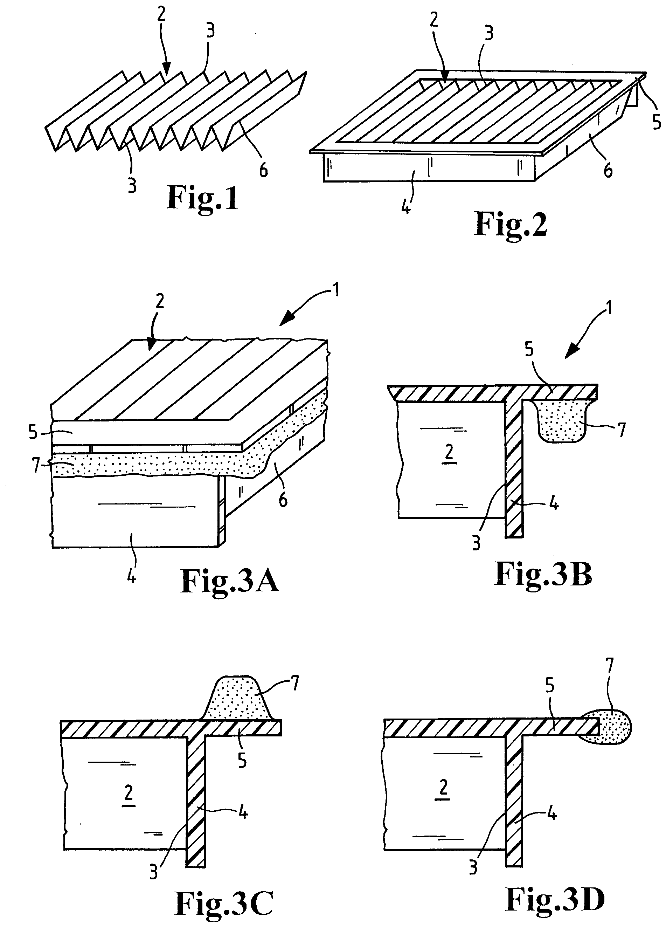

Anhand der Figuren 1 - 3 ist ein Ausführungsbeispiel eines Filterelementes in vereinfachten Herstellungszuständen dargestellt. Die Figur 1 zeigt dazu eine perspektivische Darstellung eines Faltenpacks 2. Das Faltenpack 2 ist beispielsweise aus einem Filtervliesmaterial gebildet, wobei bekannte Mechanismen, wie Messerfaltungen oder Rotationsfaltungen zum Einsatz kommen können. Das Filtervliesmaterial kann beispielsweise wärmebehandelt werden, damit eine bessere Fixierung der Faltenprofile 3 erzielt wird. Man sieht in der Darstellung der Figur 1 vordere und hintere Faltenprofile 3. Das Bezugszeichen 6 zeigt eine Vorderendfalte. Üblicherweise wurden nun auf die Faltenprofile 3, Seitenbänder aufgeklebt, um dem gesamten Faltenpack 2 eine Stabilität zu verleihen. Das ist bei dem vorgeschlagenen Filterelement nicht notwendig.

Die Figur 2 zeigt eine perspektivische Darstellung eines bereits mit einem gespritzten Kunststoffrahmen 4 versehenen Faltenpacks 2. Das Faltenpack 2 ist an den Faltenprofilen 3 mit einem gespritzten Kunststoffrahmen 4 fixiert. Der Kunststoffrahmen 4 wird beispielsweise durch ein Spritzgussverfahren erzeugt. Man erkennt in der Figur 2, dass die vordere Faltung zwischen dem vorderen und hinteren Rahmenteil 4 verläuft. Eine Verbindung zwischen den Faltenprofilen 3 und dem Kunststoffrahmen 4, der aus thermoplastischem Material geformt ist, wird durch die Wahl des Spritzgusswerkzeugs erreicht. Auf der Oberseite ist ein umlaufender Rahmenrand 5 gezeigt. Das Faltenpack 2 ist somit von dem gespritzten Kunststoffrahmen 4 umschlossen. In einem folgenden Verfahrensschritt wird nun ebenfalls durch einen Spritzgussvorgang oder durch Reaktionsspritzgießen, an dem umlaufenden Rand 5 eine Kunststoffschaumdichtung gefertigt.

In der Figur 3A ist ein Ausschnitt, der in der Orientierung der Figur 2 dem vorderen rechten Ecke des fertigen Filterelements 1 entspricht, gezeigt. Man erkennt, dass an dem Rand 5 des Rahmens 4 in der Orientierung der Figur 3A von unten eine Kuntststoffschaumdichtung 7 zugefügt wurde. Die Form der Kunststoffschaumdichtung 7 kann wiederum durch die Auswahl eines Spritzgusswerkzeugs vorgegeben werden. Die Figur 3B zeigt den Ausschnitt im Querschnitt. Dabei ist der Kunststoffrahmen 4 mit den Faltenprofilen 3 des Faltenpacks 2 verbunden. Der Kunststoffrahmen und die Kanten bzw. die Faltenprofile sind miteinander zum Beispiel verschmolzen. An die Unterseite des umlaufenden Randes 5 des Kunststoffrahmens 4 ist durch Reaktionsspritzgießen die Schaumdichtung 7 angebracht. Somit ergibt sich ein Filterelement 1 mit einem Faltenpack, einem Kunststoffrahmen 4 und einer Schaumdichtung 7. Die Schaumdichtung und der Kunststoffrahmen sind in einem Spritzgussverfahren hergestellt.

Die Figur 3C zeigt eine abgewandelte Variante, wobei an die Oberseite des umlaufenden Randes 5 des Kunststoffrahmens 4 eine durch Reaktionsspritzgießen angebrachte Schaumdichtung 7 vorgesehen ist. Die Schaumsichtung 7 kann zum Beispiel gegen die Wandung einer (nicht dargestellten) Wandung einer Filteraufnahme dichtend drücken. Bei Dichtungen, deren Dichtwirkung durch ein Drücken in Richtung des zu filternden Fluidstroms entfaltet wird, spricht man auch von axialen Dichtungen.

Die Figur 3D zeigt eine weitere Variante eines Filterelements, wobei an einen Kunststoffrahmen 4 eine Schaumdichtung 7 angebracht ist. Man erkennt, dass an dem Rand 5 des Rahmens 4 von der Seite eine Kunststoffschaumdichtung 7 zugefügt wurde. Die Form der Kunststoffschaumdichtung 7 kann wiederum durch die Auswahl eines Spritzgusswerkzeugs vorgegeben werden. Bei Dichtungen, deren Dichtwirkung durch ein Drücken senkrecht zur Richtung des zu filternden Fluidstroms entfaltet wird, spricht man auch von radialen Dichtungen.

Mit den vorgeschlagenen angeschäumten Schaumdiehtungen lassen sich sowohl radiale wie auch axiale Dichtungen realisieren.

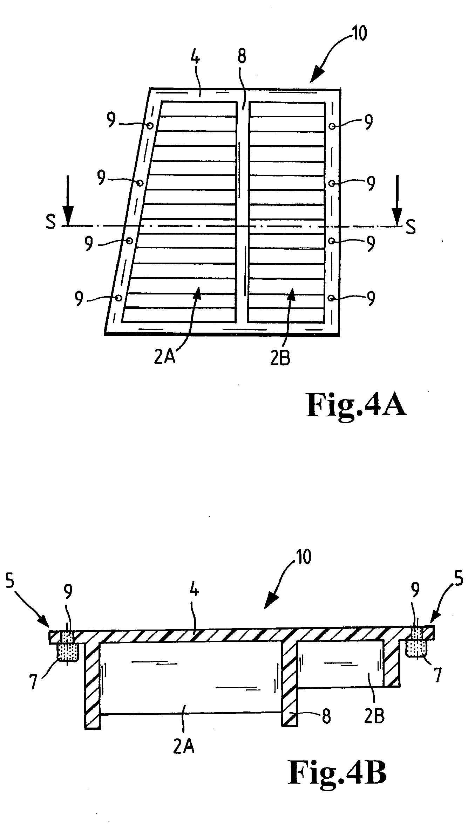

In der Figur 4 ist eine schematische Darstellung eines Ausführungsbeispiels für ein Filterelement 10 dargestellt. Das Filterelement 10 umfasst dabei zwei Faltenpacks 2A und 2B. Die Figur 4A zeigt in der Draufsicht, dass das zwei getrennte Faltenpacks 2A, 2B durch eine Strebe 8 des Kunststoffrahmens 4 getrennt sind. In der Figur 4B sieht man einen Querschnitt entlang der Linie S durch das Filterelement 10. Man erkennt, dass die Strebe 8 zwischen den beiden Faltenpacks 2A und 2B angeordnet ist und daher beide Faltenprofile stützt. Es ergibt sich ein stabiler Kunststoffrahmen 4, dessen Rand die Geometrie des Filterelementes 10 vorgibt.

Der Kunststoffrahmen 4 bzw. dessen Rand 5 ist außerdem mit Öffnungen oder Löchern 9 versehen. Durch diese Löcher 9 kann beim Spritzgussvorgang für die Kunststoffschaumdichtung 7, das aufschäumende Kunststoffmaterial durchtreten. Das Kunststoffschaummaterial verschließt die Löcher 9, so dass, wie es im Querschnitt der Figur 4B dargestellt ist, die sich ergebende Kunststoffschaumdichtung bzw. Kunststoffschaumlippe 7, besonders zuverlässig an dem Rahmen 4 haftet.

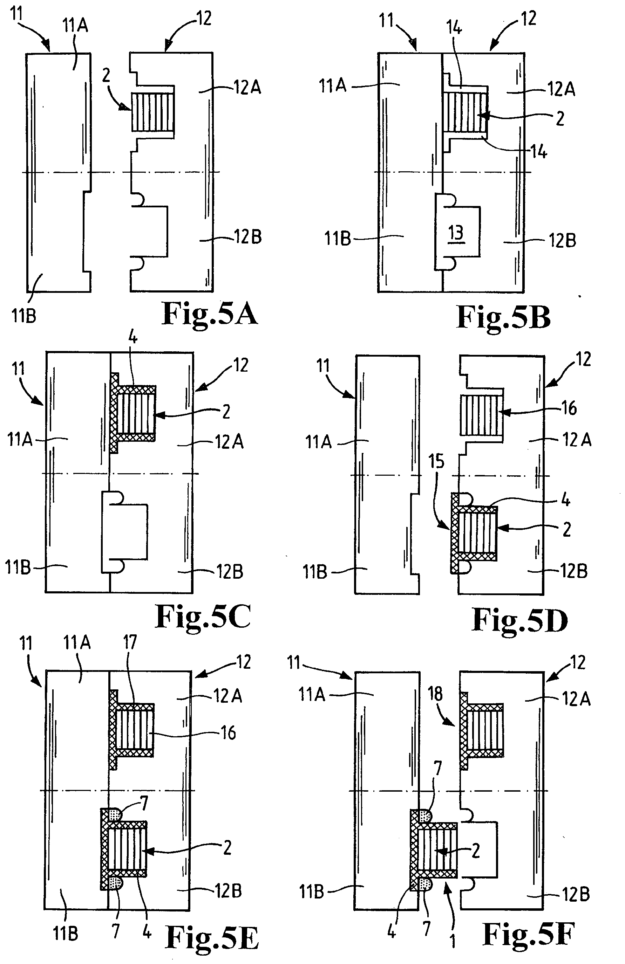

Figur 5 zeigt Darstellungen zur Erläuterung von Varianten eines Herstellungsverfahrens eines Filterelementes. Die Herstellung wird anhand der Verwendung eines Spritzgusswerkzeuges erläutert. In der Figur 5 ist zweiteiliges Spritzgusswerkzeug 11, 12 dargestellt. Dabei bildet der obere Teil 11A, 12A des Spritzgusswerkzeuges eine erste obere Kavität oder einen Hohlraum und der untere Teil 11 B, 12B des Spritzgusswerkzeuges eine untere Kavität.

Zunächst wird bei dem Herstellungsverfahren ein Faltenpack erzeugt und bereitgestellt. Anschließend wird das Faltenpack 2 in die obere Kavität 11A, 12A eingelegt, was in Figur 5A gezeigt ist. Dabei kann die Kavität oder der Hohlraum, beispielsweise der Teil 12A, fixierende Mittel für die eingelegten Falten aufweisen. Anschließend wird, wie es in der Figur 5B gezeigt ist, das Spritzgusswerkzeug geschlossen. Es wird zunächst nur der obere Teil 11A, 11 B betrachtet. Es ergeben sich zwei Hohlräume 13, 14 in dem Spritzgusswerkzeug 11A, 12A, 11 B, 12B. In dem oberen Teil des Spritzgusswerkzeugs 11A, 12A entspricht der Hohlraum 14 der Form des auszubildenden Kunststoffrahmens. Nun wird flüssiger Kunststoff nach bekannten Spritzgussverfahren in die Hohlräume 14, also das Spritzgusswerkzeug eingespritzt. Nach dem Erkalten ergibt sich so ein gespritzter Kunststoffrahmen 4 um das Faltenpack 2, wie es in der Figur 5C dargestellt ist. In den Figuren ist das Faltenpack 2 vertikal schraffiert und der Kunststoffrahmen 4 kreuzschraffiert dargestellt.

Nun wird das Spritzgusswerkzeug geöffnet. Es wird dabei beispielsweise nur die linke Hälfte 11 des Spritzgusswerkzeuges bewegt. Dadurch kann der apparative Aufwand beim Spritzgießen reduziert werden. Die Figur 5D zeigt das geöffnete Spritzgusswerkzeug 11, 12. Das mit dem Kunststoffrahmen 4 versehene Faltenpack 2 kann als halbfertiges Filterelement 15 bezeichnet werden. Das halbfertige Filterelement 15 wird nun in die Kavität des unteren Teils des Spritzgusswerkzeugs 12B eingesetzt. Gleichzeitig kann in den oberen Teil des Spritzgusswerkzeugs 12A ein neues Faltenpack 16 eingelegt werden.

Dann wird das Spritzgusswerkzeug geschlossen. Es erfolgt in der unteren Kavität 11 B, 12B ein Reaktionsspritzgießen, um einen gespritzten Schaum zu erzeugen. In der oberen Kavität 11A, 12A wird gleichzeitig das eingelegte Faltenpack 16 mit einem Kunststoffrahmen 17 versehen. In der unteren Kavität hingegen ist die Kunststoffschaumdichtung 7 ausgebildet.

Die Figur 5F zeigt wiederum das geöffnete Spritzgusswerkzeug, wobei das fertige Filterelement 1 aus dem unteren Teil des Spritzgusswerkzeugs 11 B, 12B entnommen werden kann und ausgeliefert wird. Das obere halbfertige Filterelement 18 wird nun analog der Figuren 5C und 5D in den unteren Teil des Spritzgusswerkzeugs eingesetzt und mit der Dichtung versehen.

Die zweiteilige Ausgestaltung des Spritzgusswerkzeuges liefert eine besonders effiziente und schnelle Taktung bei der Herstellung von Filterelementen.

Gegenüber bekannten Verfahren ist durch das vorgeschlagene Kunststoffumspritzen mit integrierter Schaumdichtung, beispielsweise aus PUR, ein schnelles und kostengünstiges Herstellen von Filterelementen möglich. Während bei üblichen, auch geschäumten Rahmen in der Regel nur einfache Geometrien möglich sind, kann durch das Reaktionsspritzgießen jede beliebige Geometrie für Rahmen und Dichtung erzielt werden. Die Dichtung kann beispielsweise auch neben dem äußeren Rand (axial) oder um den äußeren Rand herum (radial) gefertigt werden. Ein Nacharbeiten ist nicht notwendig, da beim Spritzgießen oder Reaktionsspritzgießen keine störenden Grate an den gefertigten Bauteilen entstehen. Eine Herstellung von Filterelementen ist daher besonders einfach und kostengünstig möglich.

## Patentansprüche

1. Filterelement (1), insbesondere Innenraumfilter für ein Kraftfahrzeug, mit einem Faltenpack (2), einem zumindest teilweise an das Faltenpack (2) gespritzten Kunststoffrahmen (4), und eine zumindest teilweise an dem Kunststoffrahmen (4) angeschäumte Kunststoffschaumdichtung (7), wobei ein erstes und ein zweites Faltenpack (2A, 2B) durch mindestens eine Rahmenstrebe (8) getrennt sind und deren Faltenprofile durch die Rahmenstrebe (8) gestützt sind.

2. Filterelement (1) nach Anspruch 1, wobei der Kunststoffrahmen (4) und die Kunststoffschaumdichtung (7) in einem Spritzgussverfahren erzeugt sind.

3. Filterelement (1) nach Anspruch 1 oder 2, wobei der Kunststoffrahmen (4) ein Thermoplast, insbesondere Polyamid, und die Kunststoffschaumdichtung (7) einen Polyurethan-Schaum aufweist.

4. Filterelement (10) nach einem der Ansprüche 1 - 3, wobei die Faltenprofile des ersten und zweiten Faltenpacks (2A, 2B) durch den Kunststoffrahmen (4) gestützt sind.

5. Filterelement (1) nach einem der Ansprüche 1 - 4, wobei die Kunststoffschaumdichtung (7) einen den äußeren Rand (5) des das Filterelement (1) umschließenden Kunststoffrahmens (4) umläuft.

6. Filterelement (1) nach einem der Ansprüche 1 - 5, wobei in dem Kunststoffrahmen (4) mindestens eine Öffnung (9) vorgesehen ist, durch die die Kunststoffschaumdichtung (7) verläuft.

7. Filterelement (1) nach einem der Ansprüche 1 - 6, wobei das Faltenpack (2) als Filtermaterial ein zellulosehaltiges Material, Glasfasermischgewebe, Polyesterfasern aufweisendes Material, Vliesmaterial und/oder laminierte Papiere umfasst.

8. Verfahren zum Herstellen eines Filterelements (1), wobei ein Kunststoffrahmen (4) zumindest teilweise um ein Faltenpack (2) in einem ersten Spritzgussvorgang erzeugt wird, und anschließend an den Kunststoffrahmen (4) zumindest teilweise eine Kunststoffschaumdichtung (7) in einem zweiten Spritzgussvorgang erzeugt wird, wobei mehrere Faltenpacks (2A, 2B) derart mit einem Kunststoffrahmen (4) umspritzt werden, dass mindestens eine Rahmenstrebe (8) Faltenprofile unterschiedlicher Faltenpacks (2A, 2B) stützt.

9. Verfahren nach Anspruch 8, umfassend: Einlegen eines Faltenpacks (2) in eine erste Spritzgussform (11A, 12A); Spritzgießen eines Kunststoffrahmens (4) zumindest teilweise um das Faltenpack (2) zum Stützen von Faltenprofilen; Einlegen des mit dem Kunststoffrahmen versehenen Faltenpacks (15) in eine zweite Spritzgussform (11B, 12B); und Reaktionsspritzgießen eines Kunststoffschaums zum Ausbilden der Kunststoffschaumdichtung (7) an dem Kunststoffrahmen (4).

10. Verfahren nach Anspruch 9, wobei die erste und die zweite Spritzgussform (11B, 12B) in einem einzigen Spritzgusswerkzeug (11, 12) integriert sind.

11. Verfahren nach Anspruch 10, wobei der erste Spritzgussvorgang mit der ersten Spritzgussform (11A, 12A) an einem ersten Faltenpack (16) und der zweite Spritzgussvorgang mit der zweiten Spritzgussform (11B, 12B) an einem zweiten, mit einem Kunststoffrahmen versehenen Faltenpack (15) gleichzeitig vollzogen werden.

12. Verfahren nach einem der Ansprüche 8 - 11, wobei ein aus zwei Spritzgusswerkzeugteilen (11, 12) gebildetes Spritzgusswerkzeug verwendet wird, und ausschließlich eines der Spritzgusswerkzeugteile (11) zum Öffnen und Schließen des Spritzgusswerkzeugs bewegt wird.

13. Verfahren nach einem der Ansprüche 8 - 12, wobei Polyamid als Kunststoffrahmenmaterial verwendet wird.

14. Verfahren nach einem der Ansprüche 8 - 13, wobei Polyurethanschaum als Kunststoffschaumdichtungsmaterial verwendet wird.

## Claims

1. Filter element (1), in particular cabin filter for a motor vehicle, with a pleated pack (2),a plastic frame (4) injected at least partially to the pleated pack (2), and a plastic foam sealing (7) foamed at least partially to the plastic frame (4), wherein a first and a second pleated pack (2A, 2B) are separated by at least one frame strut (8) and the folding profiles of which are supported by the frame strut (8).

2. Filter element (1) according to claim 1, wherein the plastic frame (4) and the plastic foam sealing (7) are realized by an injection molding process.

3. Filter element (1) according to claim 1 or 2, wherein the plastic frame (4) features a thermoplastic, in particular polyamide, and the plastic foam sealing (7) a polyurethane foam.

4. Filter element (10) according to one of the claims 1 - 3, wherein the folding profiles of the first and second pleated pack (2A, 2B) are supported by the plastic frame (4).

5. Filter element (1) according to one of the claims 1 - 4, wherein the plastic foam sealing (7) surrounds an outer edge (5) of the plastic frame (4) enclosing the filter element (1).

6. Filter element (1) according to one of the claims 1 - 5, wherein at least one opening (9) is provided in the plastic frame (4) through which extends the plastic foam sealing (7).

7. Filter element (1) according to one of the claims 1 - 6, wherein the pleated pack (2) comprises as filter material a cellulosic material, glass fiber blended fabric, material featuring polyester fibers, non-woven fabric and/or laminated paper.

8. Method for manufacturing a filter element (1), wherein a plastic frame (4) is at least partially realized around a pleated pack (2) by means of a first injection molding process, and at least partially a plastic foam sealing (7) is subsequently realized in a second injection molding process at the plastic frame (4), wherein several pleated packs (2A, 2B) are overmolded with a plastic frame (4) in such a way that at least one frame strut (8) supports folding profiles of different pleated packs (2A, 2B).

9. Method according to claim 8, comprising: placing a pleated pack (2) into a first injection mold (11A, 12A); injection molding of a plastic frame (4) at least partially around the pleated pack (2) for supporting folding profiles; placing the pleated pack (15) provided with the plastic frame into a second injection mold (11B, 12B); and reaction injection molding of a synthetic foam for forming the plastic foam sealing (7) at the plastic frame (4).

10. Method according to claim 9, wherein the first and the second injection mold (11B, 12B) are integrated in a single injection molding tool (11, 12).

11. Method according to claim 10, wherein the first injection molding process with the first injection mold (11A, 12A) at a first pleated pack (16) and the second injection molding process with the second injection mold (11B, 12B) at a second pleated pack (15) provided with a plastic frame are realized simultaneously.

12. Method according to one of the claims 8 - 11, wherein an injection molding tool made of two injection molding tool parts (11, 12) is used, and wherein exclusively one of the injection molding tool parts (11) is moved to open and close the injection molding tool.

13. Method according to one of the claims 8 - 12, wherein polyamide is used as plastic frame material.

14. Method according to one of the claims 8 - 13, wherein polyurethane foam is used as plastic foam sealing material.

## Revendications

1. Élément filtrant (1), en particulier filtre d'habitacle pour un véhicule automobile, avec un ensemble de plis (2), un châssis en matière synthétique (4) injecté, au moins partiellement, sur l'ensemble de plis (2), et un joint en mousse en matière synthétique (7) moussée, au moins partiellement, sur le châssis en matière synthétique (4), un premier et un deuxième ensembles de plis (2A, 2B) étant séparés par au moins une entretoise de châssis (8) et les profils de plis de ces ensembles de plis étant soutenus par l'entretoise de châssis (8).

2. Élément filtrant (1) selon la revendication 1, le châssis en matière synthétique (4) et le joint en mousse en matière synthétique (7) étant produits lors d'un procédé de moulage par injection.

3. Élément filtrant (1) selon la revendication 1 ou 2, le châssis en matière synthétique (4) comportant une matière thermoplastique, en particulier du polyamide, et le joint en mousse en matière synthétique (7) comportant une mousse en polyuréthane.

4. Élément filtrant (10) selon l'une des revendications 1 à 3, les profils de plis du premier et du deuxième ensembles de plis (2A, 2B) étant soutenus par le châssis en matière synthétique (4).

5. Élément filtrant (1) selon l'une des revendications 1 à 4, le joint en mousse en matière synthétique (7) entourant un bord extérieur (5) du châssis en matière synthétique (4) encerclant l'élément filtrant (1).

6. Élément filtrant (1) selon l'une des revendications 1 à 5, au moins une ouverture (9) étant prévue dans le châssis en matière synthétique (4) à travers laquelle s'étend le joint en mousse en matière synthétique (7).

7. Élément filtrant (1) selon l'une des revendications 1 à 6, l'ensemble de plis (2) comprenant, en tant que matériau filtrant, un matériau cellulosique, un textile mélangé constitué de fibres de verre, un matériau comportant des fibres polyester, un matériau non tissé et/ou des papiers laminés.

8. Procédé de fabrication d'un élément filtrant (1), un châssis en matière synthétique (4) étant produit, au moins partiellement, autour d'un ensemble de plis (2) lors d'un premier processus de moulage par injection, et par la suite, un joint en mousse en matière synthétique (7) est produit, au moins partiellement, sur le châssis en matière synthétique (4) lors d'un deuxième processus de moulage par injection, plusieurs ensembles de plis (2A, 2B) étant enrobés avec un châssis en matière synthétique (4) de sorte qu'au moins un joint en entretoise de châssis (8) soutienne des profils de plis de différents ensembles de plis (2A, 2B).

9. Procédé selon la revendication 8, comprenant : la mise en place d'un ensemble de plis (2) dans un premier moule de moulage par injection (11A, 12A) ; le moulage par injection d'un châssis en matière synthétique (4), au moins partiellement, autour de l'ensemble de plis (2) en vue de soutenir des profils de plis ; la mise en place d'un ensemble de plis (15) pourvu du châssis en matière synthétique dans un deuxième moule de moulage par injection (11B, 12B) ; et le moulage réactif par injection d'une mousse de matière synthétique afin de générer le joint en mousse en matière synthétique (7) sur le châssis en matière synthétique (4).

10. Procédé selon la revendication 9, le premier et le deuxième moules de moulage par injection (11B, 12B) étant intégrés dans un seul outil de moulage par injection (11, 12).

11. Procédé selon la revendication 10, le premier processus de moulage par injection étant exécuté avec le premier moule de moulage par injection (11A, 12A) sur un premier ensemble de plis (16) et le deuxième processus de moulage par injection avec le deuxième moule de moulage par injection (11B, 12B) sur un deuxième ensemble de plis (15) pourvu d'un châssis en matière synthétique, et ce, de façon simultanée.

12. Procédé selon l'une des revendications 8 à 11, un outil de moulage par injection constitué de deux parties d'outil de moulage par injection (11, 12) étant utilisé, et exclusivement l'une des deux parties de l'outil de moulage par injection (11) étant déplacée pour ouvrir et fermer l'outil de moulage par injection.

13. Procédé selon l'une des revendications 8 à 12, du polyamide étant utilisé comme matériau du châssis en matière synthétique.

14. Procédé selon l'une des revendications 8 à 13, de la mousse polyuréthane étant utilisée comme matériau du joint en mousse en matière synthétique.
